(19) Europäisches Patentamt
European Patent Office
Office européen des brevets

(11) **EP 4 729 588 A1**

(12) **EUROPEAN PATENT APPLICATION**
published in accordance with Art. 153(4) EPC

(43) Date of publication:
**22.04.2026 Bulletin 2026/17**

(21) Application number: **25807371.7**

(22) Date of filing: **28.02.2025**

(51) International Patent Classification (IPC):
***C09D 163/00*** *(2006.01)* ***C09D 5/44*** *(2006.01)*
***C09D 7/65*** *(2018.01)*

(52) Cooperative Patent Classification (CPC):
**C09D 5/44; C09D 7/65; C09D 163/00**

(86) International application number:
**PCT/JP2025/007135**

(87) International publication number:
**WO 2025/243636 (27.11.2025 Gazette 2025/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.05.2024 JP 2024084254**

(71) Applicant: **Nippon Paint Automotive Coatings Co., Ltd.**
**Hirakata-shi, Osaka 573-1153 (JP)**

(72) Inventors:
- **SHARAF, Maha**
  **Hirakata-shi, Osaka 573-1153 (JP)**
- **KOTANI, Masayuki**
  **Hirakata-shi, Osaka 573-1153 (JP)**

(74) Representative: **Mewburn Ellis LLP**
**Aurora Building**
**Counterslip**
**Bristol BS1 6BX (GB)**

(54) **CATIONIC ELECTRODEPOSITED PAINT COMPOSITION AND METHOD FOR FORMING CURED ELECTRODEPOSITED COATING**

(57) A cationic electrodeposition coating composition including :an amine-modified epoxy resin (A); a blocked polyisocyanate curing agent (B); and a coordination polymer catalyst (C) having a metal complex containing a metal ion (C1) and an organic ligand (C2) as a constituent unit, wherein the metal ion (C1) includes an ion of at least one metal element selected from the group consisting of Bi, Zn, Zr, Cs, and lanthanoid, and the organic ligand (C2) includes at least one selected from the group consisting of amine compounds represented by general formulas (1) to (5).

EP 4 729 588 A1

## Description

TECHNICAL FIELD

The present invention relates to a cationic electrodeposition coating composition and a method for forming a cured electrodeposition coating film.

BACKGROUND ART

Cationic electrodeposition coating compositions are generally used as an undercoating film for automobiles and the like. Cationic electrodeposition coating compositions form coating films having high corrosion resistance.

Patent Document 1 discloses a cationic electrodeposition coating composition containing a bismuth compound as a catalyst. Patent Document 2 discloses an electrodeposition coating composition containing a cyclic guanidine.

PRIOR ART DOCUMENTS

PATENT DOCUMENTS

Patent Document 1: JP-A-2015-187198
Patent Document 2: US 2011/0005937 A

SUMMARY OF THE INVENTION

PROBLEMS TO BE SOLVED BY THE INVENTION

Bismuth compounds may hydrolyze over time to lose the catalytic activity thereof. Organic amine catalysts such as a cyclic guanidine have very high solubility in water and are poor in electrodeposition efficiency, and thus are hardly contained in deposited films, and the catalytic activity thereof is hardly exhibited.

An object of the present invention is to provide a cationic electrodeposition coating composition from which a cured electrodeposition coating film having excellent corrosion resistance and appearance can be obtained.

SOLUTIONS TO THE PROBLEMS

To solve the problems described above, the present invention provides the following aspects.

[1] A cationic electrodeposition coating composition comprising:

an amine-modified epoxy resin (A);
a blocked polyisocyanate curing agent (B); and
a coordination polymer catalyst (C) having a metal complex containing a metal ion (C1) and an organic ligand (C2) as a constituent unit,
wherein
the metal ion (C1) includes an ion of at least one metal element selected from the group consisting of Bi, Zn, Zr, Cs, and lanthanoid, and
the organic ligand (C2) includes at least one selected from the group consisting of:

an amine compound (C2-1) represented by the following general formula (1):

[Chemical Formula 1]

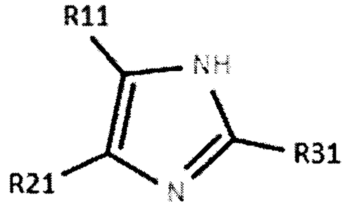

(1)

wherein R11, R21 and R31 each independently represent a hydrogen atom, an alkyl group, an aryl group, an alkoxy group, a nitro group, a halogen atom or an amino group;
an amine compound (C2-2) represented by the following general formula (2):

[Chemical Formula 2]

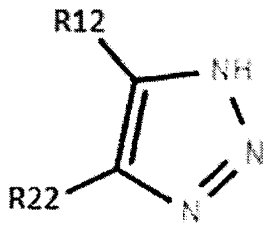

(2)

wherein R12 and R22 each independently represent a hydrogen atom, an alkyl group, an aryl group, an alkoxy group, a nitro group, a halogen atom or an amino group;
an amine compound (C2-3) represented by the following general formula (3):

[Chemical Formula 3]

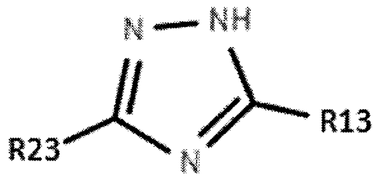

(3)

wherein R13 and R23 each independently represent a hydrogen atom, an alkyl group, an aryl group, an alkoxy group, a nitro group, a halogen atom or an amino group;
an amine compound (C2-4) represented by the following general formula (4):

[Chemical Formula 4]

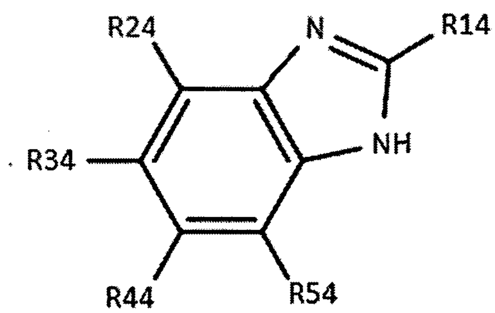

(4)

wherein R14, R24, R34, R44 and R54 each independently represent a hydrogen atom, an alkyl group, an aryl group, an alkoxy group, a nitro group, a halogen atom or an amino group; and
an amine compound (C2-5) represented by the following general formula (5):

[Chemical Formula 5]

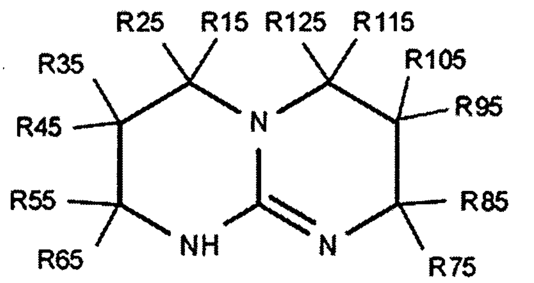

(5)

wherein R15 through R125 each independently represent a hydrogen atom, an alkyl group, an aryl group, an alkoxy group, a nitro group, a halogen atom or an amino group.

[2] The cationic electrodeposition coating composition according to [1], wherein the coordination polymer catalyst (C) is contained in an amount of 0.1 parts by mass or more and 3 parts by mass or less per 100 parts by mass of all resin solid contents of the cationic electrodeposition coating composition.
[3] The cationic electrodeposition coating composition according to [1] or [2], wherein in the coordination polymer catalyst (C), a molar ratio of the metal ion (C1) to the organic ligand (C2) (metal ion : organic ligand) is 1 : 0.5 to 1 : 5.
[4] The cationic electrodeposition coating composition according to [1] or [2], wherein in the coordination polymer catalyst (C), a molar ratio of the metal ion (C1) to the organic ligand (C2) (metal ion: organic ligand) is 1 : 1 to 1 : 2.8.
[5] The cationic electrodeposition coating composition according to any one of [1] to [4], wherein the coordination polymer catalyst (C) is a solid in the cationic electrodeposition coating composition.
[6] The cationic electrodeposition coating composition according to any one of [1] to [5], further comprising an inorganic pigment (D).
[7] The cationic electrodeposition coating composition according to any one of [1] to [6], wherein the blocked polyisocyanate curing agent (B) includes a reaction product of a blocking agent and an aromatic polyisocyanate.
[8] A method for forming a cured electrodeposition coating film, the method comprising: forming an uncured electrodeposition coating film by immersing an article to be coated in the cationic electrodeposition coating composition according to any one of [1] to [7] and performing electrodeposition coating; and forming a cured electrodeposition coating film on the article to be coated by heating the uncured electrodeposition coating film.

EFFECTS OF THE INVENTION

According to the present invention, it is possible to provide a cationic electrodeposition coating composition from which a cured electrodeposition coating film having excellent corrosion resistance and appearance can be obtained.

DETAILED DESCRIPTION

In the present disclosure, a polymer having, as a constituent unit, a metal complex in which one or more amine compounds are coordinated to a metal ion is used as a catalyst. By coordinating the amine compounds to the metal having catalytic activity, the hydrolysis thereof is suppressed, and stability is enhanced. By immobilizing the amine compound having catalytic activity on the metal, the solubility in water thereof is reduced. The polymer catalyst can maintain high catalytic activity (high stability). Since the polymer catalyst is present uniformly and finely in a deposited film, the deposited film can be densely and smoothly cured. The resulting cured electrodeposition coating film is superior in corrosion resistance and appearance.
Hereinafter, the number-average molecular weight and the weight-average molecular weight can be measured by gel permeation chromatography (GPC) using a polystyrene standard sample after removing moisture by reduced pressure drying or the like.
The average particle size is a 50% average particle size (D50) in a volume-based particle size distribution determined using a laser diffraction/scattering type particle size distribution analyzer. Examples of the particle size distribution analyzer include UPA-150 (Microtrac particle size distribution analyzer manufactured by Nikkiso Co., Ltd.).

The solid content is a component that remains as a solid after a solvent is removed. The solid content of a resin emulsion (i) described later is specifically an amine-modified epoxy resin (A), a curing agent (B), and other solid contents added as necessary. The solid content of a pigment dispersion paste (ii) is specifically a coordination polymer catalyst (C), an inorganic pigment (D), a pigment dispersion resin (E), and other solid contents added as necessary.

The resin solid content is a resin component among the solid contents. The resin solid content of the resin emulsion (i) is specifically an amine-modified epoxy resin (A) and a curing agent (B). The resin solid content of the pigment dispersion paste (ii) is specifically a pigment dispersion resin (E). The resin solid content of the cationic electrodeposition coating composition is specifically all the resin solid content contained in the resin emulsion (i) and the pigment dispersion paste (ii).

Cationic electrodeposition coating composition

The cationic electrodeposition coating composition includes an amine-modified epoxy resin (A), a blocked polyisocyanate curing agent (B), and a coordination polymer catalyst (C).

The cationic electrodeposition coating composition may further include an inorganic pigment (D). The cationic electrodeposition coating composition may further include a pigment dispersion resin (E). The cationic electrodeposition coating composition may be a mixture of the resin emulsion (i) and the pigment dispersion paste (ii). The resin emulsion (i) includes an amine-modified epoxy resin (A) and a blocked polyisocyanate curing agent (B). The pigment dispersion paste (ii) includes a coordination polymer catalyst (C), an inorganic pigment (D), and a pigment dispersion resin (E).

Hereinafter, a description is made by taking a cationic electrodeposition coating composition (hereinafter, this may be simply referred to as an electrodeposition coating material) that is a mixture of a resin emulsion (i) and a pigment dispersion paste (ii) as an example. It is noted that the cationic electrodeposition coating composition to be used in the present disclosure is not limited thereto.

First, the coordination polymer catalyst (C) will be described.

Coordination polymer catalyst (C)

The coordination polymer catalyst (C) is a polymer having, as a constituent unit, a metal complex containing a metal ion (C1) and an organic ligand (C2).

The coordination polymer catalyst (C) has the same structure as a material called metal organic frameworks (MOF). MOF is a metal complex containing a metal ion and an organic ligand, and is a highly ordered and porous structure in which metal ions (or metal clusters) to serve as nodes are bridged by the organic ligand.

The coordination polymer catalyst (C) has a large surface area and high catalytic activity. In addition, since the coordination polymer catalyst (C) is superior in stability, this high catalytic activity can be maintained. Since the coordination polymer catalyst (C) exists as a solid (powder) in the electrodeposition coating material, the coordination polymer catalyst (C) is easily electrodeposited, and can exist uniformly and finely in a deposited film. Therefore, the coordination polymer catalyst (C) can densely and smoothly cure the deposited film.

Regarding the MOF, for example, (1) supervised by Susumu Kitagawa, "Porous Materials made by using Nanoscience", CMC Publishing Co., Ltd., March 2010, and (2) edited by The Chemical Society of Japan, "Novel Porous Materials - Creation of Functional Materials Having Space", Kagaku-Dojin Publishing Co., Inc., December 2010 can be referred to.

The coordination polymer catalyst (C) may have a one-dimensional structure, may be a two-dimensional structure, and may be a three-dimensional structure. The coordination polymer catalyst (C) typically has a three-dimensional structure.

Similarly to the inorganic pigment (D), the coordination polymer catalyst (C) can be dispersed using a pigment dispersion resin (E).

The size of the coordination polymer catalyst (C) before being blended in the electrodeposition coating material is not particularly limited. The average particle size of the coordination polymer catalyst (C) is, for example, 0.001 μm or more and 10 μm or less. The average particle size of the coordination polymer catalyst (C) may be 0.01 μm or more. The average particle size of the coordination polymer catalyst (C) may be 5 μm or less.

The organic ligand (C2) is coordinate-bonded at an amino group to the metal ion (C1). The coordination number of the organic ligand (C2) is not particularly limited. The molar ratio of the metal ion to the organic ligand (metal ion: organic ligand) may be, for example, 1 : 0.5 to 1 : 5. When the number of moles of the organic ligand per mole of the metal ion is 0.5 or more, stability can be further improved. When the number of moles of the organic ligand per mole of the metal ion is 5 or less, the coating film appearance can be further improved. The number of moles of the organic ligand per mole of the metal ion may be 1.0 or more, may be 1.5 or more, and may be 2.0 or more. The number of moles of the organic ligand per mole of the metal ion may be 2.8 or less, or 2.5 or less. In one aspect, the molar ratio (metal ion: organic ligand) is, for example, 1 : 1 to 1 : 2.8.

The molar ratio (metal ion/organic ligand) is calculated from the charged amount, yield, atomic weight (or molecular weight), etc. of starting materials (for example, a metal salt that is a starting material of the metal ion (C1) and an amine compound that is a starting material of the organic ligand (C2)) at the time of producing the coordination polymer catalyst (C).
The content of the coordination polymer catalyst (C) may be 0.1 parts by mass or more and 3.0 parts by mass or less per 100 parts by mass of the resin solid content of the cationic electrodeposition coating composition. When the content of the coordination polymer catalyst (C) is 0.1 parts by mass or more, curability is improved. When the content of the coordination polymer catalyst (C) is 3.0 parts by mass or less, the coating film appearance is improved. The content of the coordination polymer catalyst (C) may be 0.5 parts by mass or more, and may be 1.0 parts by mass or more. The content of the coordination polymer catalyst (C) may be 2.5 parts by mass or less, and may be 2.0 parts by mass or less.
The coordination polymer catalyst (C) can be obtained by reacting a metal salt with an amine compound at room temperature or under heating. Examples of the metal salt include nitrates, acetates, and hydrochlorides. Examples of the amine compound include amine compounds (C2-1) to (C2-5) described later.

· Metal ion (C1)

The metal ion (C1) includes an ion of at least one metal element selected from the group consisting of Bi (bismuth), Zn (zinc), Zr (zirconium), Cs (cesium), and lanthanoid. The metal element may be Bi (bismuth) or Zn (zinc).
The lanthanoid is a generic term for 15 elements with atomic numbers from 57 to 71 (lanthanum to lutetium in the periodic table). Examples of the lanthanoid include lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).
The metal element may be contained as a cluster. The metal cluster is a group of metal atoms having a metal-metal bond.

· Organic ligand (C2)

The organic ligand (C2) includes at least one selected from the group consisting of amine compounds (C2-1) to (C2-5) represented by the following general formulas (1) to (5).
In the general formulas (1) to (5), some or all of the hydrogen atoms of the alkyl group, the aryl group, and the alkoxy group may be substituted with a halogen atom or may be unsubstituted. Some or all of the hydrogen atoms of the aryl group may be substituted or unsubstituted with an alkyl group and/or an alkoxy group. Some or all of the hydrogen atoms of the amino group may be substituted with at least one selected from the group consisting of an alkyl group, an aryl group, and an alkoxy group, and may be unsubstituted.
In the general formulas (1) to (5), the alkyl group, the aryl group, and the alkoxy group may have, for example, one or more N, O, or carbonyl groups at a terminal or in a molecular chain.
In the general formulas (1) to (5), the alkyl group may be linear, may be branched, and may contain one or more ring structures. The number of the carbon atoms of the alkyl group is not particularly limited, and is, for example, 1 to 20.
In the general formulas (1) to (5), the aryl group is not particularly limited as long as it has at least one aromatic ring. The number of the carbon atoms of the aryl group is not particularly limited, and is, for example, 6 to 20.
In the general formulas (1) to (5), the alkyl group constituting the alkoxy group may be linear, may be branched, and may contain one or more ring structures. The number of the carbon atoms of the alkyl group is not particularly limited, and is, for example, 1 to 20.
Examples of the alkyl group include unsubstituted alkyl groups such as a methyl group, an ethyl group, a propyl group, an isopropyl group, a n-butyl group, and an isobutyl group; and substituted alkyl groups such as a chloromethyl group.
The organic ligand (C2) may not contain an S atom. A group containing an S atom (for example, an -SH group) may lower the corrosion resistance of a cured electrodeposition coating film.

· Amine compound (C2-1)

The amine compound (C2-1) is represented by the following general formula (1). The amine compound (C2-1) is specifically imidazole and a derivative thereof.

[Chemical Formula 6]

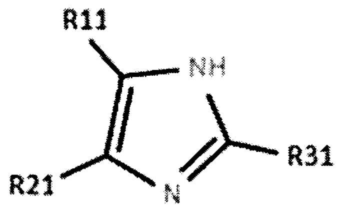

(1)

wherein R11, R21 and R31 each independently represent a hydrogen atom, an alkyl group, an aryl group, an alkoxy group, a nitro group, a halogen atom or an amino group.

At least one of R11, R21, and R31 may be a hydrogen atom or a methyl group. R11, R21, and R31 may all be a hydrogen atom. R11 and R21 may be a hydrogen atom, and R31 may be an alkyl group having 1 to 3 carbon atoms.

· Amine compound (C2-2)

The amine compound (C2-2) is represented by the following general formula (2). The amine compound (C2-2) is specifically triazole and a derivative thereof.

[Chemical Formula 7]

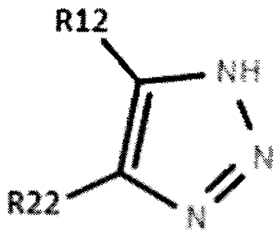

(2)

wherein R12 and R22 each independently represent a hydrogen atom, an alkyl group, an aryl group, an alkoxy group, a nitro group, a halogen atom or an amino group.

At least one of R12 and R22 may be a hydrogen atom. R12 and R22 may both be a hydrogen atom.

· Amine compound (C2-3)

The amine compound (C2-3) is represented by the following general formula (3). The amine compound (C2-3) is specifically triazole and a derivative thereof.

[Chemical Formula 8]

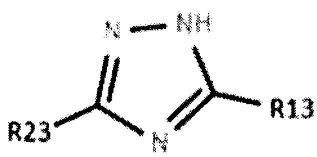

(3)

wherein R13 and R23 each independently represent a hydrogen atom, an alkyl group, an aryl group, an alkoxy group, a nitro group, a halogen atom or an amino group.

At least one of R13 and R23 may be a hydrogen atom. R13 and R23 may both be a hydrogen atom.

· Amine compound (C2-4)

The amine compound (C2-4) is represented by the following general formula (4). The amine compound (C2-4) is specifically benzimidazole and a derivative thereof.

[Chemical Formula 9]

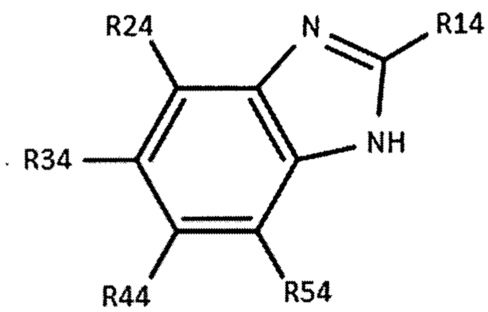

(4)

wherein R14, R24, R34, R44 and R54 each independently represent a hydrogen atom, an alkyl group, an aryl group, an alkoxy group, a nitro group, a halogen atom or an amino group.

At least one of R14, R24, R34, R44 and R54 may be a hydrogen atom. R14, R24, R34, R44 and R54 may all be a hydrogen atom.

· Amine compound (C2-5)

The amine compound (C2-5) is represented by the following general formula (5). The amine compound (C2-5) is specifically 1,5,7-triazabicyclo[4,4,0]dec-5-ene (TBD) and a derivative thereof.

[Chemical Formula 10]

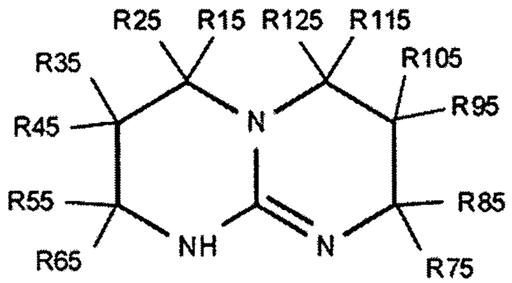

(5)

wherein R15 to R125 each independently represent a hydrogen atom, an alkyl group, an aryl group, an alkoxy group, a nitro group, a halogen atom or an amino group.

At least one of R15, R25, R35, R45, R55, R65, R75, R85, R95, R105, R115, and R125 may be a hydrogen atom. Any of R15, R25, R35, R45, R55, R65, R75, R85, R95, R105, R115, and R125 may all be a hydrogen atom.

Resin emulsion (i)

The resin emulsion (i) includes an amine-modified epoxy resin (A) and a blocked polyisocyanate curing agent (B). The resin emulsion (i) may further include other components as necessary.

· Amine-modified epoxy resin (A)

The amine-modified epoxy resin (A) is a coating film-forming resin for constituting an electrodeposition coating film.

In the amine-modified epoxy resin (A), an oxirane ring in an epoxy resin skeleton may be modified with an amine compound. The amine-modified epoxy resin (A) is prepared, for example, by ring-opening an oxirane ring in a starting epoxy resin skeleton via a reaction with an amine compound such as a primary amine, secondary amine or tertiary amine and/or an acid salt thereof.

A typical example of the starting epoxy resin is a polyphenol polyglycidyl ether type epoxy resin. The polyphenol polyglycidyl ether type epoxy resin is obtained via a reaction of a polycyclic phenol compound, such as bisphenol A, bisphenol F, bisphenol S, phenol novolac, and cresol novolac, with epichlorohydrin.

Other examples of the starting epoxy resin include the oxazolidone ring-containing epoxy resins disclosed in JP H5-306327 A. The epoxy resins are prepared via a reaction of a diisocyanate compound or a bisurethane compound obtained by blocking the isocyanate groups of a diisocyanate compound with a lower alcohol such as methanol and ethanol, with epichlorohydrin.

The starting epoxy resin may be chain-extended with a bifunctional polyester polyol, a polyether polyol, a bisphenol, a dibasic carboxylic acid, or the like.

The starting epoxy resin may have an oxirane ring with a monohydroxy compound such as 2-ethylhexanol, nonylphenol, ethylene glycol mono-2-ethylhexyl ether, ethylene glycol mono-n-butyl ether, propylene glycol mono-2-ethylhexyl ether, or a monocarboxylic acid such as octylic acid added. Due to this configuration, the molecular weight or amine equivalent of the epoxy resin is adjusted, so that the thermal flowability can be improved.

Examples of the amine compound include primary amines and secondary amines. When a starting epoxy resin is reacted with a secondary amine, an amine-modified epoxy resin having a tertiary amino group is obtained. When a starting epoxy resin is reacted with a primary amine, an amine-modified epoxy resin having a secondary amino group is obtained. When a secondary amine having a blocked primary amine, an amine-modified epoxy resin having a primary amino group is obtained. For example, in the preparation of an amine-modified epoxy resin having a primary amino group and a secondary amino group, a ketimine in which a primary amino group is blocked with a ketone can be used as the amine compound. When a ketimine is introduced into a starting epoxy resin and then deblocked, a primary amino group and a secondary amino group are produced. As the amine to be reacted with the oxirane ring, a tertiary amine may be used in combination, as necessary.

Examples of the primary amine and the secondary amine include butylamine, octylamine, diethylamine, dibutylamine, methylbutylamine, monoethanolamine, diethanolamine, and N-methylethanolamine. Examples of the secondary amine having a blocked primary amine include a ketimine of aminoethylethanolamine and a diketimine of diethylenetriamine. Examples of the tertiary amine which may optionally be used include triethylamine, N,N-dimethylbenzylamine, and N,N-dimethylethanolamine. These are used singly or two or more of them are used in combination.

As the amine compound, 50 to 100% by mass of a secondary amine, 0 to 30% by mass of a secondary amine having a blocked primary amine, and 0 to 20% by mass of a primary amine may be used in combination.

The number-average molecular weight of the amine-modified epoxy resin (A) is, for example, 1,000 to 5,000. When the number-average molecular weight is 1,000 or more, solvent resistance and corrosion resistance are further improved. When the number-average molecular weight is 5,000 or less, the viscosity of the amine-modified epoxy resin (A) is easily adjusted, and synthesis proceeds smoothly. In addition, the amine-modified epoxy resin (A) is easily emulsified and dispersed, and handleability is improved. The number-average molecular weight of the amine-modified epoxy resin (A) may be 2,000 or more. The number-average molecular weight of the amine-modified epoxy resin (A) may be 3,500 or less.

The amine value of the amine-modified epoxy resin (A) may be 20 to 100 mg KOH/g. When the amine value is 20 mg KOH/g or more, the dispersion stability of the amine-modified epoxy resin (A) in the electrodeposition coating material is improved. When the amine value is 100 mg KOH/g or less, the water resistance of the electrodeposition coating film is enhanced. The amine value of the amine-modified epoxy resin (A) may be 80 mg KOH/g or less.

The hydroxyl value of the amine-modified epoxy resin (A) may be 150 to 650 mg KOH/g. When the hydroxyl value is 150 mg KOH/g or more, the curability and the appearance of the electrodeposition coating film are improved. When the hydroxyl value is 650 mg KOH/g or less, the water resistance of the electrodeposition coating film is enhanced. The hydroxyl value of the amine-modified epoxy resin (A) may be 180 mg KOH/g or more. The hydroxyl value of the amine-modified epoxy resin (A) may be 300 mg KOH/g or less.

The amine-modified epoxy resin (A) may have a number-average molecular weight of 1,000 to 5,000, an amine value of 20 to 100 mg KOH/g, and a hydroxyl value of 150 to 650 mg KOH/g. This amine-modified epoxy resin (A) further improves corrosion resistance.

As the amine-modified epoxy resin (A), two or more amine-modified epoxy resins differing in amine value and/or hydroxyl value may be used in combination. In this case, the average amine value and the average hydroxyl value calculated on the basis of the mass ratio of the amine-modified epoxy resins to be used are merely required to be adjusted within the above numerical ranges.

The electrodeposition coating material may contain other coating film-forming resins. Examples of such other coating film-forming resins include acrylic resins, polyester resins, urethane resins, olefine resins, phenol resins, and xylene resins.

As coating film-forming resins, for example, an amino group-containing acrylic resin and an amino group-containing polyester resin may be used, as necessary, together with the amine-modified epoxy resin (A).

· Blocked polyisocyanate curing agent (B)

The blocked polyisocyanate curing agent (B) (hereinafter sometimes simply referred to as "curing agent (B)")

also is a coating film-forming resin. The curing agent (B) preferentially reacts with an amino group of the amine-modified epoxy resin (A) and further reacts with a hydroxy group to form a crosslinked structure.

The curing agent (B) is prepared by blocking a polyisocyanate with a blocking agent. The blocking is performed, for example, by adding the blocking agent dropwise to the polyisocyanate at 40 to 50°C with stirring in the presence of a curing catalyst (for example, a tin-based catalyst), as necessary.

The polyisocyanate may include at least one selected from the group consisting of an aromatic polyisocyanate, an aliphatic polyisocyanate, and an alicyclic polyisocyanate. The polyisocyanate may be an aromatic polyisocyanate, and may be an aliphatic polyisocyanate. The polyisocyanate may be an aromatic polyisocyanate. The curing agent (B) may include a reaction product of a blocking agent and an aromatic polyisocyanate.

Examples of the aromatic polyisocyanate include 4,4'-diphenylmethane diisocyanate, tolylene diisocyanate, and xylylene diisocyanate. Examples of the aliphatic diisocyanate include aliphatic diisocyanates such as hexamethylene diisocyanate, tetramethylene diisocyanate, and trimethylhexamethylene diisocyanate. Examples of the alicyclic polyisocyanate include alicyclic diisocyanates such as isophorone diisocyanate and 4,4'-methylenebis(cyclohexylisocyanate).

In the curing agent (B), the polyisocyanate may form an adduct form such as a biuret form, a uretdione form, an isocyanurate form, or an allophanate form.

Examples of the blocking agent include monohydric alkyl (or aromatic) alcohols such as n-butanol, n-hexyl alcohol, 2-ethylhexanol, lauryl alcohol, phenol carbinol and methylphenyl carbinol; cellosolves such as ethylene glycol monohexyl ether and ethylene glycol mono-2-ethylhexyl ether; polyether-type both-ended diols such as polyethylene glycol, polypropylene glycol and polytetramethylene ether glycol phenol; polyester-type both-ended polyols obtained from a diol such as ethylene glycol, propylene glycol or 1,4-butanediol and a dicarboxylic acid such as oxalic acid, succinic acid, adipic acid, suberic acid or sebacic acid; phenols such as para-t-butylphenol and cresol; oxime compounds such as dimethyl ketoxime, methyl ethyl ketoxime, methyl isobutyl ketoxime, methyl amyl ketoxime and cyclohexanone oxime; and lactams typified by ε-caprolactam and γ-butyrolactam. Among them, the blocking agent may be an oxime compound.

The blocking ratio of the curing agent (B) may be 100%. Due to this configuration, the storage stability of the electrodeposition coating material is improved.

As the curing agent (B), a combination of a blocked aliphatic diisocyanate and a blocked aromatic diisocyanate may be used.

As a curing agent, at least one selected from the group consisting of an organic curing agent (melamine resin, phenol resin, or the like), a silane coupling agent, and a metal curing agent may be used together with the curing agent (B).

Preparation of resin emulsion (i)

The resin emulsion (i) can be prepared as follows. The amine-modified epoxy resin (A) and the curing agent (B) are each dissolved in an organic solvent, whereby solutions are prepared. These solutions are mixed and then neutralized using a neutralizing acid.

Examples of the neutralizing acid include organic acids such as methanesulfonic acid, sulfamic acid, lactic acid, dimethylol propionic acid, formic acid, and acetic acid. The neutralizing acid may be at least one acid selected from the group consisting of formic acid, acetic acid, and lactic acid.

The ratio of the equivalent of the neutralizing acid to the equivalent of the amino groups of the amine-modified epoxy resin (A) (neutralization ratio) may be 10 to 100%. When the neutralization ratio is 10% or more, the affinity of the amine-modified epoxy resin (A) for water is improved, and the dispersibility in water is enhanced. The neutralization ratio may be 20% or more. The neutralization ratio may be 70% or less. The neutralizing acid is used in an amount satisfying the above-mentioned neutralization ratio.

The curing agent (B) is used in an amount sufficient for reacting with active hydrogen-containing functional groups, such as primary amino groups, secondary amino groups, or hydroxy groups, in the amine-modified epoxy resin (A) during curing.

The solid content mass ratio (A/B) of the amine-modified epoxy resin (A) to the curing agent (B) may be 90/10 to 50/50. By adjusting A/B, which may be 80/20 to 65/35, the fluidity and the curing rate of a deposited film are controlled, and the coating film appearance is improved.

The solid content of the resin emulsion (i) may be 25% by mass or more and 50% by mass or less. The solid content of the resin emulsion (i) may be 35% by mass or more. The solid content of the resin emulsion (i) may be 45% by mass or less.

Pigment dispersion paste (ii)

The pigment dispersion paste (ii) includes a coordination polymer catalyst (C), an inorganic pigment (D), and a pigment dispersion resin (E).

Inorganic pigment (D)

The inorganic pigment (D) is generally used in an electrodeposition coating material, and is not particularly limited. Examples of the inorganic pigment (D) include coloring pigments such as titanium white (titanium dioxide), carbon black, and red iron oxide; extender pigments such as kaolin, talc, aluminum silicate, calcium carbonate, mica, and clay; and antirust pigments such as iron phosphate, aluminum phosphate, calcium phosphate, aluminum tripolyphosphate, aluminum phosphomolybdate, and aluminum zinc phosphomolybdate. These are used singly or two or more of them are used in combination.

The total content of the inorganic pigment (D) may be 1% by mass or more and 37% by mass or less of the resin solid content of the electrodeposition coating material. The content of the inorganic pigment (D) may be 5% by mass or more, may be 10% by mass or more, may be 12% by mass or more, may be 15% by mass or more, and may be 16% by mass or more. The content of the inorganic pigment (D) may be 30% by mass or less, may be 27% by mass or less, and may be 25% by mass or less.

Pigment dispersion resin (E)

The pigment dispersion resin is a resin for dispersing a pigment, and it is dispersed in an aqueous medium and then used. As the pigment dispersion resin, for example, a pigment dispersion resin having a cationic group can be used. Examples of the pigment dispersion resin having a cationic group include an amine-modified epoxy resin (e) having at least one or more members selected from among a quaternary ammonium group, a tertiary sulfonium group, and a primary amino group. As the aqueous solvent, ion-exchanged water or water containing a small amount of alcohol is used.

The amine-modified epoxy resin (e) can be prepared, for example, by reacting a half-blocked isocyanate with a hydroxy group of a starting epoxy resin having a hydroxy group to introduce a blocked isocyanate group. The introduction of the blocked isocyanate group is performed by reacting a starting epoxy resin having a hydroxy group with a half-blocked isocyanate at 140°C for about 1 hour.

As the starting epoxy resin, a polyepoxide can be used. The polyepoxide has two or more 1,2-epoxy groups on average in one molecule. Examples of the polyepoxide include the starting epoxy resins recited as examples for the amine-modified epoxy resin (A).

The half-blocked isocyanate is prepared by blocking some isocyanate groups of the polyisocyanate with a blocking agent. Examples of the polyisocyanate include the polyisocyanates recited as examples for the curing agent (B). Examples of the blocking agent include lower aliphatic alkyl monoalcohols having 4 to 20 carbon atoms. Examples of the blocking agent specifically include butyl alcohol, amyl alcohol, hexyl alcohol, 2-ethylhexyl alcohol, and heptyl alcohol.

The number of the carbon atoms of the tertiary amine may be 1 to 6. Examples of the tertiary amine include dimethylethanolamine, trimethylamine, triethylamine, dimethylbenzylamine, diethylbenzylamine, N,N-dimethylcyclohexylamine, tri-n-butylamine, diphenethylmethylamine, dimethylaniline, and N-methylmorpholine.

The neutralizing acid is not particularly limited. Examples of the neutralizing acid include inorganic acids or organic acids such as hydrochloric acid, nitric acid, phosphoric acid, formic acid, acetic acid, and lactic acid. The neutralizing acid may be at least one acid selected from the group consisting of formic acid, acetic acid, and lactic acid.

Others

The electrodeposition coating material may include an organic solvent. Examples of the organic solvent include ethylene glycol monobutyl ether, ethylene glycol monohexyl ether, ethylene glycol monoethylhexyl ether, propylene glycol monobutyl ether, dipropylene glycol monobutyl ether, and propylene glycol monophenyl ether.

The electrodeposition coating material may include additives commonly used in the coating material field. Examples of the additives include a surfactant, a viscosity modifier, a cissing inhibitor, an inorganic rust inhibitor, an auxiliary complexing agent, a buffer, a smoothing agent, a stress relaxation agent, a brightener, a semi-brightener, an antioxidant, and an ultraviolet absorber. The additives are added during the preparation of the resin emulsion (i) and/or the pigment dispersion paste (ii).

Formation of cured electrodeposition coating film

A cured electrodeposition coating film is formed by a method including: forming an uncured electrodeposition coating film by immersing an article to be coated in the cationic electrodeposition coating composition described above and performing electrodeposition coating; and forming a cured electrodeposition coating film on the article to be coated by heating the uncured electrodeposition coating film.

Electrodeposition coating

An article to be coated is immersed in a bath containing an electrodeposition coating material, and a voltage is applied by applying a current between the article to be coated as a cathode and an anode separately installed. As a result, components of the electrodeposition coating material are deposited on the article to be coated, and a deposited film (uncured electrodeposition coating film) is formed.

The applied voltage may be 50 V or more and 450 V or less. The bath temperature is, for example, 10°C or more and 45°C or less. The application time is, for example, 2 minutes or more and 5 minutes or less.

The article to be coated is not particularly limited as long as it has electrical conductivity. Examples of the article to be coated include cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based steel sheets and tin-based plated steel sheets.

Heating

The article to be coated is pulled up from the bath and heated. A cured electrodeposition coating film is thereby formed. The article to be coated may be washed with water before being heated.

The heating temperature is, for example, 120°C or more and 260°C or less. The heating temperature may be 140°C or more. The heating temperature may be 220°C or less. The heating time is, for example, 10 minutes or more and 30 minutes or less.

The thickness of the cured electrodeposition coating film is, for example, 5 μm or more and 40 μm or less. Due to this configuration, sufficient corrosion resistance is obtained. The thickness of the cured electrodeposition coating film may be 10 μm or more. The thickness of the cured electrodeposition coating film may be 25 μm or less.

EXAMPLES

The present invention will be described hereafter in more detail by way of examples, to which the present invention is not intended to be limited. In the examples, "parts" and "%" are on a mass basis unless otherwise indicated.

[Production Example A] Production of amine-modified epoxy resin (A)

First, 92 parts of methyl isobutyl ketone (MIBK), 940 parts of a bisphenol A-type epoxy resin (trade name: DER-331J, produced by The Dow Chemical Company), 382 parts of bisphenol A, 63 parts of octylic acid and 2 parts of dimethylbenzylamine were added, and then were reacted until the epoxy equivalent was 1110 g/eq while the temperature in the reaction vessel was held at 140°C, and then cooling was performed until the temperature in the reaction vessel was 120°C. A mixture of 78 parts of diethylenetriamine diketimine (solution in methyl isobutyl ketone having a solid content concentration of 73%) and 92 parts of diethanolamine was then added, and the mixture was reacted at 120°C for 1 hour, affording an amine-modified epoxy resin (A).

[Production Example B1] Production of blocked polyisocyanate curing agent (B1)

A reaction vessel was charged with 1680 parts of hexamethylene diisocyanate (HDI) and 732 parts of MIBK, and the mixture was heated to 60°C. A solution of 346 parts of trimethylolpropane dissolved in 1067 parts of methyl ethyl keto (MEK) oxime was added thereto dropwise at 60°C over 2 hours. Further, the mixture was heated at 75°C for 4 hours, disappearance of an absorption based on an isocyanate group was then confirmed in IR spectrum measurement, the mixture was allowed to cool. Thereafter, 27 parts of MIBK were added, affording a blocked polyisocyanate curing agent (B1) having a solid content concentration of 80%.

[Production Example B2] Production of blocked polyisocyanate curing agent (B2)

A reaction vessel was charged with 1340 parts of 4,4'-diphenylmethane diisocyanate and 277 parts of MIBK, which were then heated to 80°C, and a solution of 226 parts of ε-caprolactam dissolved in 944 parts of butyl cellosolve was then added dropwise at 80°C over 2 hours. Further, the mixture was heated at 100°C for 4 hours, disappearance of an absorption based on an isocyanate group was then confirmed in IR spectrum measurement, the mixture was allowed to cool. Thereafter, 349 parts of MIBK were added, affording a blocked isocyanate curing agent (B2) having a solid content concentration of 80%.

[Production Example C1] Production of coordination polymer catalyst (C-1)

29.1 parts of a metal salt (bismuth nitrate pentahydrate) were dissolved in 29.1 parts of N,N-dimethylformamide (DMF). Separately, 8.2 parts of an organic compound (imidazole) were dissolved in 25.4 parts of DMF, then 0.6 parts of triethylamine were added, and the mixture was stirred for 15 minutes.

Next, a DMF solution in which a metal salt (bismuth nitrate pentahydrate) was dissolved was added to a DMF solution in which imidazole was dissolved, and the mixture was stirred at room temperature for 48 hours. Subsequently, the pH was adjusted to 9.0 with a 10M aqueous NaOH solution, and the mixed solution was filtered using a filter having a filtration diameter of 1 μm. The resulting solid collected by the filtration was dried at 80°C for 12 hours, affording a coordination polymer catalyst (C-1).

[Production Example C2] Production of coordination polymer catalyst (C-2)

A coordination polymer catalyst (C-2) was obtained in the same manner as in Production Example C1 except that 14.3 parts of triazole was used as the organic compound.

[Production Example C3] Production of coordination polymer catalyst (C-3)

A coordination polymer catalyst (C-3) was obtained in the same manner as in Production Example C1 except that 14.2 parts of benzimidazole was used as the organic compound.

[Production Example C4] Production of coordination polymer catalyst (C-4)

A coordination polymer catalyst (C-4) was obtained in the same manner as in Production Example C1 except that 16.7 parts of TBD were used as the organic compound.

[Production Example C5] Production of coordination polymer catalyst (C-5)

A coordination polymer catalyst (C-5) was obtained in the same manner as in Production Example C1 except that 17.9 parts of zinc nitrate hexahydrate were used as the metal salt.

[Production Example C6] Production of coordination polymer catalyst (C-6)

A coordination polymer catalyst (C-6) was obtained in the same manner as in Production Example C2 except that 17.9 parts of zinc nitrate hexahydrate were used as the metal salt.

[Production Example C7] Production of coordination polymer catalyst (C-7)

A coordination polymer catalyst (C-7) was obtained in the same manner as in Production Example C3 except that 17.9 parts of zinc nitrate hexahydrate were used as the metal salt.

[Production Example C8] Production of coordination polymer catalyst (C-8)

A coordination polymer catalyst (C-8) was obtained in the same manner as in Production Example C4 except that 17.9 parts of zinc nitrate hexahydrate was used as the metal salt.

[Production Example C9] Production of coordination polymer catalyst (C-9)

A coordination polymer catalyst (C-9) was obtained in the same manner as in Production Example C1 except that 13.9 parts of zirconium nitrate hydrate were used as the metal salt.

[Production Example C10] Production of coordination polymer catalyst (C-10)

A coordination polymer catalyst (C-10) was obtained in the same manner as in Production Example C2 except that 13.9 parts of zirconium nitrate hydrate were used as the metal salt.

[Production Example C11] Production of coordination polymer catalyst (C-11)

A coordination polymer catalyst (C-11) was obtained in the same manner as in Production Example C3 except that 13.9 parts of zirconium nitrate hydrate was used as the metal salt.

[Production Example C12] Production of coordination polymer catalyst (C-12)

A coordination polymer catalyst (C-12) was obtained in the same manner as in Production Example C4 except that 13.9 parts of zirconium nitrate hydrate was used as the metal salt.

[Production Example C13] Production of coordination polymer catalyst (C-13)

A coordination polymer catalyst (C-13) was obtained in the same manner as in Production Example C1 except that 11.7 parts of cesium nitrate were used as the metal salt.

[Production Example C14] Production of coordination polymer catalyst (C-14)

A coordination polymer catalyst (C-14) was obtained in the same manner as in Production Example C2 except that 11.7 parts of cesium nitrate were used as the metal salt.

[Production Example C15] Production of coordination polymer catalyst (C-15)

A coordination polymer catalyst (C-15) was obtained in the same manner as in Production Example C3 except that 11.7 parts of cesium nitrate was used as the metal salt.

[Production Example C16] Production of coordination polymer catalyst (C-16)

A coordination polymer catalyst (C-16) was obtained in the same manner as in Production Example C4 except that 11.7 parts of cesium nitrate was used as the metal salt.

[Production Example C17] Production of coordination polymer catalyst (C-17)

A coordination polymer catalyst (C-17) was obtained in the same manner as in Production Example C1 except that 26.1 parts of cerium nitrate hexahydrate were used as the metal salt.

[Production Example C18] Production of coordination polymer catalyst (C-18)

A coordination polymer catalyst (C-18) was obtained in the same manner as in Production Example C2 except that 26.1 parts of cerium nitrate hexahydrate was used as the metal salt.

[Production Example C19] Production of coordination polymer catalyst (C-19)

A coordination polymer catalyst (C-19) was obtained in the same manner as in Production Example C3 except that 26.1 parts of cerium nitrate hexahydrate was used as the metal salt.

[Production Example C20] Production of coordination polymer catalyst (C-20)

A coordination polymer catalyst (C-20) was obtained in the same manner as in Production Example C4 except that 26.1 parts of cerium nitrate hexahydrate were used as the metal salt.

[Production Example C21] Production of coordination polymer catalyst (C-21)

A coordination polymer catalyst (C-21) was obtained in the same manner as in Production Example C1 except that 26.0 parts of lanthanum nitrate hexahydrate was used as the metal salt.

[Production Example C22] Production of coordination polymer catalyst (C-22)

A coordination polymer catalyst (C-22) was obtained in the same manner as in Production Example C2 except

that 26.0 parts of lanthanum nitrate hexahydrate were used as the metal salt.

[Production Example C23] Production of coordination polymer catalyst (C-23)

A coordination polymer catalyst (C-23) was obtained in the same manner as in Production Example C3 except that 26.0 parts of lanthanum nitrate hexahydrate was used as the metal salt.

[Production Example C24] Production of coordination polymer catalyst (C-24)

A coordination polymer catalyst (C-24) was obtained in the same manner as in Production Example C4 except that 26.0 parts of lanthanum nitrate hexahydrate was used as the metal salt.

[Production Example C25] Production of coordination polymer catalyst (C-25)

A coordination polymer catalyst (C-25) was obtained in the same manner as in Production Example C1 except that 26.3 parts of neodymium nitrate hexahydrate were used as the metal salt.

[Production Example C26] Production of coordination polymer catalyst (C-26)

A coordination polymer catalyst (C-26) was obtained in the same manner as in Production Example C2 except that 26.3 parts of neodymium nitrate hexahydrate were used as the metal salt.

[Production Example C27] Production of coordination polymer catalyst (C-27)

A coordination polymer catalyst (C-27) was obtained in the same manner as in Production Example C3 except that 26.3 parts of neodymium nitrate hexahydrate were used as the metal salt.

[Production Example C28] Production of coordination polymer catalyst (C-28)

A coordination polymer catalyst (C-28) was obtained in the same manner as in Production Example C4 except that 26.3 parts of neodymium nitrate hexahydrate were used as the metal salt.

[Production Example C29] Production of coordination polymer catalyst (C-29)

A coordination polymer catalyst (C-29) was obtained in the same manner as in Production Example C1 except that 2.0 parts of imidazole was used as the organic compound.

[Production Example C30] Production of coordination polymer catalyst (C-30)

A coordination polymer catalyst (C-30) was obtained in the same manner as in Production Example C2 except that 3.6 parts of triazole were used as the organic compound.

[Production Example C31] Production of coordination polymer catalyst (C-31)

A coordination polymer catalyst (C-31) was obtained in the same manner as in Production Example C3 except that 3.5 parts of benzimidazole were used as the organic compound.

[Production Example C32] Production of coordination polymer catalyst (C-32)

A coordination polymer catalyst (C-32) was obtained in the same manner as in Production Example C4 except that 4.2 parts of TBD was used as the organic compound.

[Production Example C33] Production of coordination polymer catalyst (C-33)

A coordination polymer catalyst (C-33) was obtained in the same manner as in Production Example C1 except that 20.4 parts of imidazole was used as the organic compound.

[Production Example C34] Production of coordination polymer catalyst (C-34)

A coordination polymer catalyst (C-34) was obtained in the same manner as in Production Example C2 except that 35.7 parts of triazole were used as the organic compound.

[Production Example C35] Production of coordination polymer catalyst (C-35)

A coordination polymer catalyst (C-35) was obtained in the same manner as in Production Example C3 except that 35.4 parts of benzimidazole was used as the organic compound.

[Production Example C36] Production of coordination polymer catalyst (C-36)

A coordination polymer catalyst (C-36) was obtained in the same manner as in Production Example C4 except that 41.8 parts of TBD was used as the organic compound.

[Production Example C37] Production of coordination polymer catalyst (C-37)

A coordination polymer catalyst (C-37) was obtained in the same manner as in Production Example C1 except that 17.9 parts of zinc nitrate hexahydrate were used as the metal salt and 2.0 parts of imidazole was used as the organic compound.

[Production Example C38] Production of coordination polymer catalyst (C-38)

A coordination polymer catalyst (C-38) was obtained in the same manner as in Production Example C2 except that 17.9 parts of zinc nitrate hexahydrate were used as the metal salt and 3.6 parts of triazole was used as the organic compound.

[Production Example C39] Production of coordination polymer catalyst (C-39)

A coordination polymer catalyst (C-39) was obtained in the same manner as in Production Example C3 except that 17.9 parts of zinc nitrate hexahydrate were used as the metal salt and 3.5 parts of benzimidazole were used as the organic compound.

[Production Example C40] Production of coordination polymer catalyst (C-40)

A coordination polymer catalyst (C-40) was obtained in the same manner as in Production Example C4 except that 17.9 parts of zinc nitrate hexahydrate were used as the metal salt and 4.2 parts of TBD was used as the organic compound.

[Production Example C41] Production of coordination polymer catalyst (C-41)

A coordination polymer catalyst (C-41) was obtained in the same manner as in Production Example C1 except that 17.9 parts of zinc nitrate hexahydrate were used as the metal salt and 20.4 parts of imidazole were used as the organic compound.

[Production Example C42] Production of coordination polymer catalyst (C-42)

A coordination polymer catalyst (C-42) was obtained in the same manner as in Production Example C2 except that 17.9 parts of zinc nitrate hexahydrate were used as the metal salt and 35.7 parts of triazole were used as the organic compound.

[Production Example C43] Production of coordination polymer catalyst (C-43)

A coordination polymer catalyst (C-43) was obtained in the same manner as in Production Example C3 except that 17.9 parts of zinc nitrate hexahydrate was used as the metal salt and 35.4 parts of benzimidazole was used as the organic compound.

[Production Example C44] Production of coordination polymer catalyst (C-44)

A coordination polymer catalyst (C-44) was obtained in the same manner as in Production Example C4 except that 17.9 parts of zinc nitrate hexahydrate were used as the metal salt and 41.8 parts of TBD was used as the organic compound.

[Production Example C45] Production of coordination polymer catalyst (C-45)

A coordination polymer catalyst (C-45) was obtained in the same manner as in Production Example C1 except that 9.9 parts of 2-methylimidazole were used as the organic compound.

[Production Example C46] Production of coordination polymer catalyst (C-46)

A coordination polymer catalyst (C-46) was obtained in the same manner as in Production Example C1 except that 11.5 parts of 2-ethylimidazole was used as the organic compound.

[Production Example C47] Production of coordination polymer catalyst (C-47)

A coordination polymer catalyst (C-47) was obtained in the same manner as in Production Example C1 except that 1.6 parts of imidazole was used as the organic compound.

[Production Example C48] Production of coordination polymer catalyst (C-48)

A coordination polymer catalyst (C-48) was obtained in the same manner as in Production Example C1 except that 24.5 parts of imidazole was used as the organic compound.

[Comparative Production Example C49] Production of coordination polymer catalyst (C-49)

A coordination polymer catalyst (C-49) containing an S atom was obtained in the same manner as in Production Example C1 except that 20.1 parts of 2-mercaptobenzthiazole was used as the organic compound.

[Production Example E] Production of pigment dispersion resin (E)

· Preparation of 2-ethylhexanol half-blocked isophorone diisocyanate

A reaction vessel equipped with a stirrer, a condenser tube, a nitrogen inlet tube, and a thermometer were charged with 222.0 parts of isophorone diisocyanate (IPDI), which was then diluted with 39.1 parts of MIBK. 0.2 parts of dibutyltin dilaurate were added thereto. The mixture was heated to 50°C, and 131.5 parts of 2-ethylhexanol was then added dropwise under stirring in a dry nitrogen atmosphere over 2 hours, affording 2-ethylhexanol half-blocked IPDI (solid content concentration: 90.0% by mass).

· Preparation of quaternization agent

To a reaction vessel were sequentially added 87.2 parts of dimethylethanolamine, 117.6 parts of a 75% lactic acid aqueous solution and 39.2 parts of ethylene glycol mono-n-butyl ether, and stirred at 65°C for 30 minutes, and thus a quaternization agent was prepared.

· Production of pigment dispersion resin

A reaction vessel was charged with 710.0 parts of a bisphenol A-type epoxy resin (trade name: DER-331J, manufactured by The Dow Chemical Company) and 289.6 parts of bisphenol A, which were then reacted at a temperature of 150 to 160°C for 1 hour in a nitrogen atmosphere. After cooling to 120°C, 498.8 parts of the previously prepared 2-ethylhexanol half-blocked IPDI (MIBK solution) were added. The reaction mixture was stirred at 110 to 120°C for 1 hour. Subsequently, 463.4 parts of ethylene glycol mono-n-butyl ether were added, the mixture was cooled to 85 to 95°C, and 196.7 parts of the previously prepared quaternization agent were added. The reaction mixture was held at 85 to 95°C until the acid value reached 1, and 964 parts of deionized water were then added, affording a pigment dispersion resin (amine-modified epoxy resin (e)) (solid content concentration: 50% by mass).

[Preparation Example 1] Preparation of pigment dispersion paste

Ion exchanged water and 60 parts of the pigment dispersion resin (amine-modified epoxy resin (e)) were mixed and stirred at room temperature for 1 hour. Thereafter, 8.2 parts of the coordination polymer catalyst (C-1), 1 part of carbon, 40 parts of titanium dioxide, and 59 parts of Satintone (calcined kaolin) were added, and the mixture was stirred at 40°C for 1 hour using a sand mill, affording a pigment dispersion paste (solid content concentration: 47% by mass).

[Preparation Example 2] Preparation of resin emulsion (Em)

The amine-modified epoxy resin (A) (350 parts, solid content), 75 parts (solid content) of the blocked polyisocyanate curing agent (B1), and 75 parts (solid content) of the blocked polyisocyanate curing agent (B2) were mixed. Ethylene glycol mono-2-ethylhexyl ether was added thereto in an amount of 3% (15 parts) based on the solid contents. Next, formic acid was added such that the neutralization ratio reached 40% to neutralize the amine-modified epoxy resin (A), and subsequently ion-exchanged water was added thereto to slowly dilute the mixture. Subsequently, MIBK was removed under reduced pressure such that the solid content reached 40%, thereby affording a resin emulsion (Em).

[Example 1]

To a stainless steel container were added 516 parts of ion-exchanged water, 393 parts of the resin emulsion (Em), and 91 parts of the pigment dispersion paste. Thereafter, the mixture was aged at 40°C for 16 hours, affording a cationic electrodeposition coating composition.

[Examples 2 to 54, Comparative Example 1]

Cationic electrodeposition coating compositions were obtained in the same manner as in Example 1 except that the kind of the coordination polymer catalyst was changed as shown in Tables 1 to 9. The contents of the coordination polymer catalyst (C) shown in the tables are values based on 100 parts by mass of the resin solid content of each cationic electrodeposition coating composition.

[Comparative Example 2]

A cationic electrodeposition coating composition was obtained in the same manner as in Example 1 except that a metal compound (C3, bismuth nitrate pentahydrate) and an amine compound (C4, imidazole) were each added instead of the coordination polymer catalyst.

[Comparative Example 3]

A cationic electrodeposition coating composition was obtained in the same manner as in Example 1 except that a metal compound (C3, zinc nitrate hexahydrate) and an amine compound (C4, imidazole) were each added instead of the coordination polymer catalyst.

[Comparative Example 4]

A cationic electrodeposition coating composition was obtained in the same manner as in Example 1 except that only a metal compound (C3, bismuth nitrate pentahydrate) was added instead of the coordination polymer catalyst.

[Comparative Example 5]

A cationic electrodeposition coating composition was obtained in the same manner as in Example 1 except that only an amine compound (C4, imidazole) was added instead of the coordination polymer catalyst.

[Evaluation]

The following evaluations were carried out using the cationic electrodeposition coating compositions obtained in Examples and Comparative Examples.

(1) Curability

Using an electrodeposition coating material immediately after preparation, a coating film was deposited on a tin plate whose mass was measured in advance such that a dry coating film having a film thickness of 20 μm would be formed. Thereafter, heating was performed at 160°C for 15 minutes to form a cured electrodeposition coating film on the tin plate. After the mass of the coated plate was measured, the coated plate was immersed in acetone, refluxed for 6 hours, and then dried at 105°C for 20 minutes. The mass of the coated plate after drying was measured, and the gel fraction was determined by the following formula (1).

$$\text{Gel fraction (\%)} = (W2 - W0)/(W1 - W0) \times 100$$

In the formula, WO represents the mass of the tin plate, W1 represents the mass of the coated plate after curing, and W2 represents the mass of the coated plate after immersion in acetone.

Separately, using an electrodeposition coating material having been left to stand at 40°C for 30 days after preparation, a coated plate was prepared in the same manner as described above, and the gel fraction was determined. The larger the gel fraction is, the higher the curability is. When the gel fraction is 85% or more, it can be evaluated that the tested sample is superior in curability.

(2) Catalyst stability

The difference between the gel fraction immediately after the preparation of a catalyst and the gel fraction after leaving the catalyst to stand for 40 days was determined and evaluated according to the following criteria. When the rating is C, B or A, it can be evaluated that the catalyst is superior in stability.

(Evaluation criteria)

A: Difference in gel fraction is 2% or less.
B: Difference in gel fraction is more than 2% and 4% or less.
C: Difference in gel fraction is more than 4% and 9% or less.
D: Difference in gel fraction is 9% or more.

(3) Corrosion resistance

A cold-rolled steel sheet (JIS G 3141, SPCC-SD) was immersed in SURFCLEANER EC90 (produced by Nippon Paint Co., Ltd.) at 50°C for 2 minutes, thereby being degreased. Next, the cold-rolled steel sheet was immersed in SURFFINE GL1 (produced by Nippon Paint Co., Ltd.) at room temperature for 30 seconds, and immersed in SURFDYNE 6350 (produced by Nippon Paint Co., Ltd.) at 35°C for 2 minutes. The steel sheet was then rinsed with deionized water.

To an electrodeposition coating material was added a required amount of 2-ethylhexyl glycol such that a cured electrodeposition coating film having a thickness of 15 μm would be formed. The cold-rolled steel sheet was completely embedded in the diluted electrodeposition coating material, and application of a voltage was then immediately started. The voltage was applied under such a condition that the voltage was raised for 30 seconds to 180 V and this voltage was held for 150 seconds. Thus, an uncured electrodeposition coating film was deposited on the cold-rolled steel sheet. The resulting uncured electrodeposition coating film was heated and cured at 140°C for 15 minutes, whereby a coated sheet having a cured electrodeposition coating film was obtained.

The cured electrodeposition coating film was cross-cut with a box cutter such that the cut would reach the cold-rolled steel sheet. Subsequently, this coated plate was subjected to a 35°C salt spray test for 1000 hours in accordance with JIS Z-2371. The maximum width of rust or a swell on one side of the cut part was measured and evaluated according to the following criteria. When the rating is C, B, or A, it can be evaluated that the tested sample is superior in corrosion resistance.

(Evaluation criteria)

A: The maximum width is 2.0 mm or less.

B: The maximum width is more than 2.0 mm and 3.5 mm or less.
C: The maximum width is more than 3.5 mm and 5.0 mm or less.
D: The maximum width is more than 5.0 mm.

(4) Coating film appearance (surface roughness Ra)

For a coated plate prepared in the same manner as described above, an arithmetic average roughness (Ra) of a roughness curve of a cured electrodeposition coating film was measured by the method in according to JIS B 0601 using an evaluation type surface roughness measuring machine (SURFTEST SJ-201P, manufactured by Mitutoyo Corporation). A sample with 2.5-mm-width cut-off (number of partitions: 5) was subjected to measurement seven times, and an Ra value (μm) was obtained in terms of top/bottom-trimmed mean. The obtained average Ra value was evaluated according to the following criteria. When the evaluation is C, B, or A, it can be evaluated that the coating film is superior in appearance.

(Evaluation criteria)

A: The average Ra value is less than 0.20 μm.
B: The average Ra value is 0.20 μm or more and less than 0.25 μm.
C: The average Ra value is 0.25 μm or more and less than 0.30 μm.
D: The average Ra value is 0.30 μm or more.

[Table 1]

| | | Example | | | | | | | |
|---|---|---|---|---|---|---|---|---|---|
| | | 1 | 2 | 3 | 4 | 5 | 6 | 7 | 8 |
| Coordination polymer catalyst (C) | Metal element (C1) | Bi | Bi | Bi | Bi | Zn | Zn | Zn | Zn |
| | Organic ligand (C2) | Imidazole | Triazole | Benzimidazole | TBD | Imidazole | Triazole | Benzimidazole | TBD |
| | C1/C2 (molar ratio) | 1:2 | 1:2 | 1:2 | 1:2 | 1:2 | 1:2 | 1:2 | 1:2 |
| | Production Example | C1 | C2 | C3 | C4 | C5 | C6 | C7 | C8 |
| | Content | 1.50 | 1.50 | 1.50 | 1.50 | 1.50 | 1.50 | 1.50 | 1.50 |
| Curability | Gel fraction, initial/% | 98 | 98 | 98 | 99 | 97 | 97 | 96 | 98 |
| | Gel fraction, after 30 days at 40°C/% | 98 | 97 | 97 | 98 | 97 | 97 | 96 | 97 |
| Catalyst stability | | A | A | A | A | A | A | A | A |
| Corrosion resistance | | A | A | A | A | A | A | A | A |
| Appearance | | A | A | A | B | A | A | A | B |

[Table 2]

| | | Example | | | | | | | |
|---|---|---|---|---|---|---|---|---|---|
| | | 9 | 10 | 11 | 12 | 13 | 14 | 15 | 16 |
| Coordination polymer catalyst (C) | Metal element (C1) | Zr | Zr | Zr | Zr | Cs | Cs | Cs | Cs |
| | Organic ligand (C2) | Imidazole | Triazole | Benzimidazole | TBD | Imidazole | Triazole | Benzimidazole | TBD |
| | C1/C2 (molar ratio) | 1:2 | 1:2 | 1:2 | 1:2 | 1:2 | 1:2 | 1:2 | 1:2 |
| | Production Example | C9 | C10 | C11 | C12 | C13 | C14 | C15 | C16 |
| | Content | 1.50 | 1.50 | 1.50 | 1.50 | 1.50 | 1.50 | 1.50 | 1.50 |
| Curability | Gel fraction, initial/% | 93 | 93 | 92 | 91 | 94 | 96 | 95 | 94 |
| | Gel fraction, after 30 days at 40°C/% | 92 | 92 | 91 | 90 | 92 | 96 | 94 | 93 |
| Catalyst stability | | A | A | A | A | A | A | A | A |
| Corrosion resistance | | B | B | B | B | B | B | B | A |
| Appearance | | B | B | B | B | B | B | B | B |

[Table 3]

| | | Example | | | | | | | |
|---|---|---|---|---|---|---|---|---|---|
| | | 17 | 18 | 19 | 20 | 21 | 22 | 23 | 24 |
| Coordination polymer catalyst (C) | Metal element (C1) | Ce | Ce | Ce | Ce | La | La | La | La |
| | Organic ligand (C2) | Imidazole | Triazole | Benzimidazole | TBD | Imidazole | Triazole | Benzimidazole | TBD |
| | C1/C2 (molar ratio) | 1:2 | 1:2 | 1:2 | 1:2 | 1:2 | 1:2 | 1:2 | 1:2 |
| | Production Example | C17 | C18 | C19 | C20 | C21 | C22 | C23 | C24 |
| | Content | 1.50 | 1.50 | 1.50 | 1.50 | 1.50 | 1.50 | 1.50 | 1.50 |
| Curability | Gel fraction, initial/% | 96 | 97 | 97 | 95 | 93 | 95 | 96 | 97 |
| | Gel fraction, after 30 days at 40°C/% | 96 | 95 | 96 | 95 | 91 | 92 | 93 | 94 |
| Catalyst stability | | A | A | A | A | A | B | B | B |
| Corrosion resistance | | A | B | B | A | B | B | B | B |
| Appearance | | B | B | B | B | B | B | B | B |

[Table 4]

| | | Example | | | |
|---|---|---|---|---|---|
| | | 25 | 26 | 27 | 28 |
| Coordination polymer catalyst (C) | Metal element (C1) | Nd | Nd | Nd | Nd |
| | Organic ligand (C2) | Imidazole | Triazole | Benzimidazole | TBD |
| | C1/C2 (molar ratio) | 1:2 | 1:2 | 1:2 | 1:2 |
| | Production Example | C25 | C26 | C27 | C28 |
| | Content | 1.50 | 1.50 | 1.50 | 1.50 |
| Curability | Gel fraction, initial/% | 92 | 93 | 91 | 92 |
| | Gel fraction, after 30 days at 40°C/% | 90 | 91 | 90 | 90 |
| Catalyst stability | | A | A | A | A |
| Corrosion resistance | | B | B | B | B |
| Appearance | | B | B | B | B |

[Table 5]

| | | Example | | | | | | | |
|---|---|---|---|---|---|---|---|---|---|
| | | 29 | 30 | 31 | 32 | 33 | 34 | 35 | 36 |
| Coordination polymer catalyst (C) | Metal element (C1) | Bi | Bi | Bi | Bi | Bi | Bi | Bi | Bi |
| | Organic ligand (C2) | Imidazole | Triazole | Benzimidazole | TBD | Imidazole | Triazole | Benzimidazole | TBD |
| | C1/C2 (molar ratio) | 1:0.5 | 1:0.5 | 1:0.5 | 1:0.5 | 1:5 | 1:5 | 1:5 | 1:5 |
| | Production Example | C29 | C30 | C31 | C32 | C33 | C34 | C35 | C36 |
| | Content | 1.50 | 1.50 | 1.50 | 1.50 | 1.50 | 1.50 | 1.50 | 1.50 |
| Curability | Gel fraction, initial/% | 94 | 94 | 95 | 93 | 94 | 93 | 95 | 94 |
| | Gel fraction, after 30 days at 40°C/% | 91 | 92 | 91 | 90 | 92 | 92 | 91 | 92 |
| Catalyst stability | | B | A | B | B | A | A | B | A |
| Corrosion resistance | | B | B | B | B | B | B | B | B |
| Appearance | | A | A | A | B | B | B | B | B |

[Table 6]

| | | Example | | | | | | | |
|---|---|---|---|---|---|---|---|---|---|
| | | 37 | 38 | 39 | 40 | 41 | 42 | 43 | 44 |
| Coordination polymer catalyst (C) | Metal element (C1) | Zn | Zn | Zn | Zn | Zn | Zn | Zn | Zn |
| | Organic ligand (C2) | Imidazole | Triazole | Benzimidazole | TBD | Imidazole | Triazole | Benzimidazole | TBD |
| | C1/C2 (molar ratio) | 1:0.5 | 1:0.5 | 1:0.5 | 1:0.5 | 1:5 | 1:5 | 1:5 | 1:5 |
| | Production Example | C37 | C38 | C39 | C40 | C41 | C42 | C43 | C44 |
| | Content | 1.50 | 1.50 | 1.50 | 1.50 | 1.50 | 1.50 | 1.50 | 1.50 |
| Curability | Gel fraction, initial/% | 93 | 93 | 94 | 94 | 91 | 92 | 90 | 92 |
| | Gel fraction, after 30 days at 40°C/% | 91 | 90 | 90 | 91 | 91 | 91 | 90 | 92 |
| Catalyst stability | | A | B | B | B | A | A | A | A |
| Corrosion resistance | | B | B | B | B | B | B | B | B |
| Appearance | | B | A | A | B | B | B | B | B |

[Table 7]

| | | Example | | | |
|---|---|---|---|---|---|
| | | 45 | 46 | 47 | 48 |
| Coordination polymer catalyst (C) | Metal element (C1) | Bi | Bi | Bi | Bi |
| | Organic ligand (C2) | 2-Methylimidazole | 2-Ethylimidazole | Imidazole | Imidazole |
| | C1/C2 (molar ratio) | 1:2 | 1:2 | 1:0.4 | 1:6 |
| | Production Example | C45 | C46 | C47 | C48 |
| | Content | 1.50 | 1.50 | 1.50 | 1.50 |
| Curability | Gel fraction, initial/% | 97 | 95 | 95 | 95 |
| | Gel fraction, after 30 days at 40°C/% | 97 | 95 | 86 | 88 |
| Catalyst stability | | A | A | C | C |
| Corrosion resistance | | A | A | B | B |
| Appearance | | A | A | B | C |

[Table 8]

| | | Example | | | | | | Comparative Example |
|---|---|---|---|---|---|---|---|---|
| | | 49 | 50 | 51 | 52 | 53 | 54 | 1 |
| Coordination polymer catalyst (C) | Metal element (C1) | Bi | Bi | Bi | Bi | Zn | Zn | Bi |
| | Organic ligand (C2) | Imidazole | Imidazole | Imidazole | Imidazole | Imidazole | Imidazole | 2-Mercaptobenzothiazole |
| | C1/C2 (molar ratio) | 1:2 | 1:2 | 1:2 | 1:2 | 1:2 | 1:2 | - |
| | Production Example | C1 | C1 | C1 | C1 | C5 | C5 | C49 |
| | Content | 0.05 | 0.10 | 3.00 | 4.00 | 0.10 | 3.00 | 1.50 |
| Curability | Gel fraction, initial/% | 86 | 91 | 100 | 100 | 90 | 98 | 89 |
| | Gel fraction, after 30 days at 40°C/% | 85 | 91 | 100 | 100 | 90 | 97 | 87 |
| Catalyst stability | | A | A | A | A | A | A | A |
| Corrosion resistance | | C | B | B | A | B | B | D |
| Appearance | | A | A | B | C | A | B | B |

[Table 9]

| | | Comparative Example | | | |
|---|---|---|---|---|---|
| | | 2 | 3 | 4 | 5 |
| Metal compound (C3) | | Bi | Zn | Bi | - |
| Amine compound (C4) | | Imidazole | Imidazole | - | Imidazole |
| C3/C4 (molar ratio) | | 1:2 | 1:2 | - | - |
| Content (C3) | | 1.17 | 1.03 | 1.50 | - |
| Content (C4) | | 0.33 | 0.47 | - | 1.50 |
| Curability | Gel fraction, initial/% | 97 | 96 | 94 | 87 |
| | Gel fraction, after 30 days at 40°C/% | 87 | 85 | 81 | 87 |
| Catalyst stability | | D | D | D | A |
| Corrosion resistance | | B | B | B | D |
| Appearance | | D | D | A | D |

INDUSTRIAL APPLICABILITY

The present invention can provide a cured electrodeposition coating film having excellent corrosion resistance and appearance. The present invention is suitable particularly for electrodeposition coating of automobile bodies.

This application claims priority based on Japanese Patent Application No. 2024-084254, which was filed in Japan on May 23, 2024, the disclosure of which application is incorporated herein by reference in its entirety.

## Claims

**1.** A cationic electrodeposition coating composition comprising:

an amine-modified epoxy resin (A);
a blocked polyisocyanate curing agent (B); and
a coordination polymer catalyst (C) having a metal complex containing a metal ion (C1) and an organic ligand (C2) as a constituent unit,
wherein
the metal ion (C1) includes an ion of at least one metal element selected from the group consisting of Bi, Zn, Zr, Cs, and lanthanoid, and
the organic ligand (C2) includes at least one selected from the group consisting of:
an amine compound (C2-1) represented by the following general formula (1):

[Chemical Formula 1]

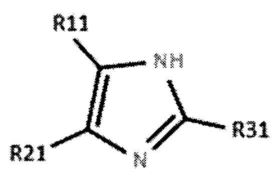

(1)

wherein R11, R21 and R31 each independently represent a hydrogen atom, an alkyl group, an aryl group, an alkoxy group, a nitro group, a halogen atom or an amino group;
an amine compound (C2-2) represented by the following general formula (2):

[Chemical Formula 2]

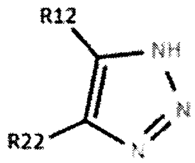

(2)

wherein R12 and R22 each independently represent a hydrogen atom, an alkyl group, an aryl group, an alkoxy group, a nitro group, a halogen atom or an amino group;
an amine compound (C2-3) represented by the following general formula (3):

[Chemical Formula 3]

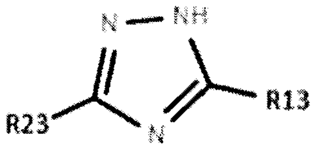

(3)

wherein R13 and R23 each independently represent a hydrogen atom, an alkyl group, an aryl group, an alkoxy group, a nitro group, a halogen atom or an amino group;
an amine compound (C2-4) represented by the following general formula (4):

[Chemical Formula 4]

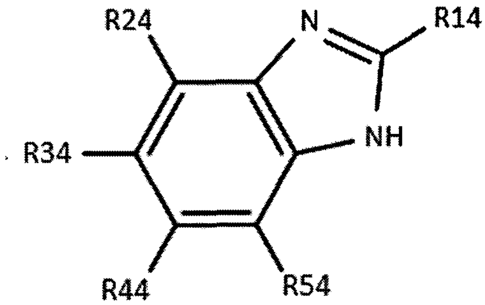

(4)

wherein R14, R24, R34, R44 and R54 each independently represent a hydrogen atom, an alkyl group, an aryl group, an alkoxy group, a nitro group, a halogen atom or an amino group; and
an amine compound (C2-5) represented by the following general formula (5):

[Chemical Formula 5]

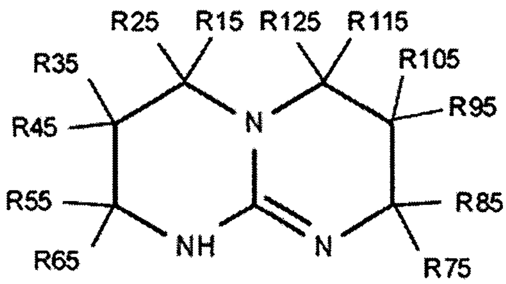

(5)

wherein R15 through R125 each independently represent a hydrogen atom, an alkyl group, an aryl group, an alkoxy group, a nitro group, a halogen atom or an amino group.

2. The cationic electrodeposition coating composition according to claim 1, wherein the coordination polymer catalyst (C) is contained in an amount of 0.1 parts by mass or more and 3 parts by mass or less per 100 parts by mass of all resin solid contents of the cationic electrodeposition coating composition.

3. The cationic electrodeposition coating composition according to claim 1 or 2, wherein in the coordination polymer catalyst (C), a molar ratio of the metal ion (C1) to the organic ligand (C2) (metal ion: organic ligand) is 1 : 0.5 to 1 : 5.

4. The cationic electrodeposition coating composition according to claim 1 or 2, wherein in the coordination polymer catalyst (C), a molar ratio of the metal ion (C1) to the organic ligand (C2) (metal ion: organic ligand) is 1 : 1 to 1 : 2.8.

5. The cationic electrodeposition coating composition according to any one of claims 1 to 4, wherein the coordination polymer catalyst (C) is a solid in the cationic electrodeposition coating composition.

6. The cationic electrodeposition coating composition according to any one of claims 1 to 5, further comprising an inorganic pigment (D).

7. The cationic electrodeposition coating composition according to any one of claims 1 to 6, wherein the blocked polyisocyanate curing agent (B) includes a reaction product of a blocking agent and an aromatic polyisocyanate.

8. A method for forming a cured electrodeposition coating film, the method comprising: forming an uncured electrodeposition coating film by immersing an article to be coated in the cationic electrodeposition coating composition according to any one of claims 1 to 7 and performing electrodeposition coating; and forming a cured electrodeposition coating film on the article to be coated by heating the uncured electrodeposition coating film.

## INTERNATIONAL SEARCH REPORT

International application No.
**PCT/JP2025/007135**

**A. CLASSIFICATION OF SUBJECT MATTER**

***C09D 163/00***(2006.01)i; ***C09D 5/44***(2006.01)i; ***C09D 7/65***(2018.01)i
FI: C09D163/00; C09D5/44 A; C09D7/65

According to International Patent Classification (IPC) or to both national classification and IPC

**B. FIELDS SEARCHED**

Minimum documentation searched (classification system followed by classification symbols)

C09D163/00; C09D5/44; C09D7/65

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-24288 A (NIPPON PAINT CO., LTD.) 04 February 2010 (2010-02-04) claims 1-4, paragraphs [0001]-[0007], [0015]-[0080], [0088]-[0150] | 1-8 |
| A | JP 2015-187199 A (NIPPON PAINT AUTOMOTIVE COATINGS CO., LTD.) 29 October 2015 (2015-10-29) claims 1-10, paragraphs [0001]-[0096], [0097]-[0142] | 1-8 |
| A | JP 2002-129100 A (NIPPON PAINT CO., LTD.) 09 May 2002 (2002-05-09) claims 1-4, paragraphs [0001]-[0005], [0008]-[0029], [0030]-[0049] | 1-8 |
| A | JP 2018-100309 A (NITTO KASEI CO., LTD.) 28 June 2018 (2018-06-28) claims 1-3, paragraphs [0001]-[0015], [0017]-[0043], [0044]-[0061] | 1-8 |
| A | WO 2017/187900 A1 (NITTO KASEI CO., LTD.) 02 November 2017 (2017-11-02) claims 1-7, paragraphs [0001]-[0011], [0014]-[0052], [0053]-[0077] | 1-8 |
| A | WO 2015/166745 A1 (NITTO KASEI CO., LTD.) 05 November 2015 (2015-11-05) claims 1-6, paragraphs [0001]-[0010], [0017]-[0058], [0059]-[0094] | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 March 2025** | **08 April 2025** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

**INTERNATIONAL SEARCH REPORT**

International application No.
**PCT/JP2025/007135**

**C. DOCUMENTS CONSIDERED TO BE RELEVANT**

| Category* | Citation of document, with indication, where appropriate, of the relevant passages | Relevant to claim No. |
|---|---|---|
| A | JP 2008-231142 A (NIPPON PAINT CO., LTD.) 02 October 2008 (2008-10-02) claims 1-6, paragraphs [0001]-[0018], [0021]-[0085], [0086]-[0123] | 1-8 |
| A | JP 2013-56961 A (NIPPON PAINT CO., LTD.) 28 March 2013 (2013-03-28) claims 1-8, paragraphs [0001]-[0019], [0020]-[0093], [0094]-[0121] | 1-8 |

Form PCT/ISA/210 (second sheet) (July 2022)

**INTERNATIONAL SEARCH REPORT**
**Information on patent family members**

International application No.
**PCT/JP2025/007135**

| Patent document cited in search report | Publication date (day/month/year) | Patent family member(s) | Publication date (day/month/year) |
|---|---|---|---|
| JP 2010-24288 A | 04 February 2010 | (Family: none) | |
| JP 2015-187199 A | 29 October 2015 | (Family: none) | |
| JP 2002-129100 A | 09 May 2002 | (Family: none) | |
| JP 2018-100309 A | 28 June 2018 | WO 2016/167147 A1 | |
| WO 2017/187900 A1 | 02 November 2017 | (Family: none) | |
| WO 2015/166745 A1 | 05 November 2015 | US 2017/0051160 A1<br>claims<br>EP 3138885 A1<br>CN 106232750 A | |
| JP 2008-231142 A | 02 October 2008 | (Family: none) | |
| JP 2013-56961 A | 28 March 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015187198 A
- US 20110005937 A
- JP H5306327 A
- JP 2024084254 A


### Non-patent literature cited in the description


- **SUSUMU KITAGAWA**. Porous Materials made by using Nanoscience. CMC Publishing Co., Ltd, March 2010
- Novel Porous Materials - Creation of Functional Materials Having Space. The Chemical Society of Japan. Kagaku-Dojin Publishing Co., Inc, December 2010